# EUROPEAN PATENT SPECIFICATION

(11) **EP 3 581 140 B1**
(45) Date of publication and mention of the grant of the patent: **26.01.2022**
(21) Application number: 18305716.5
(22) Date of filing: 12.06.2018
(51) Int. Cl.: A61C 5/00, A61C 7/14

(54) **PEARL AS A HOLDING ELEMENT FOR AN ORTHODONTIC SPLINT**
PERLE ALS HALTEELEMENT FÜR EINE KIEFERORTHOPÄDISCHE SCHIENE
PERLE COMME ÉLÉMENT DE MAINTIEN POUR UNE ATTELLE ORTHODONTIQUE

(43) Date of publication of application: 18.12.2019
(73) Proprietor: 3C, 93150 Blanc Mesnil (FR)
(72) Inventor: CURIEL, Bruno, 43583 Raanana (IL); COUDRIN, Benjamin, 31490 Leguevin (FR); ERNENWEIN, Didier, 92420 Vaucresson (FR); HARVENT, Jacques, 94170 Le Perreux sur Marne (FR)
(74) Representative: Plasseraud IP

(56) References cited:
- FR-A1- 3 005 405
- KR-B1- 101 461 317
- US-A1- 2008 057 460
- US-A1- 2017 112 596
- US-A1- 2017 281 314
- US-A1- 2018 014 916

## Description

### FIELD OF THE DISCLOSURE

The disclosure relates to a use of a pearl as a holding element for a splint for an orthodontic treatment and a method to manufacturing such a pearl.

More precisely, the disclosure relates to a use of a pearl as a holding element for a splint, the pearl being destined to be placed on a tooth for an orthodontic treatment, the pearl having a surface, the surface consisting of a first surface and a second surface, the first surface being destined to be in contact with a tooth and the second surface being opposite to the first surface.

### BACKGROUND OF THE DISCLOSURE

In the field of orthodontics, it is known to fit a patient suffering from malocclusion of the jaws and/or dental misalignment with an orthodontic appliance intended to align the teeth over the course of a period of treatment. Each orthodontic appliance may be produced individually for each patient or not. Different treatment techniques exist on the market.

In a known manner, orthodontic appliances exist comprising one or a plurality of orthodontic wires, a plurality of brackets which are each provided with one or a plurality of slots wherein the orthodontic wire may be inserted, or attachment means whereby the wire may be held. These appliances are offered in two versions.

In the labial version, the brackets are arranged on the outer (labial) surface of the teeth. The orthodontic archwire is then inserted into the slots of the brackets so as to align the teeth. In this version, the brackets are visible when the subject wearing them smiles.

In the lingual version, the brackets are arranged on the inner (lingual) surface of the teeth. The brackets are then externally invisible.

Generally, as disclosed in document US 8678817 B2, a bracket includes a mounting base for attachment to a tooth surface and an archwire slot formed upon the base and sized for receiving an orthodontic archwire. The bracket is provided with tie wings that hold the archwire by means of a wire ligature or elastic ligature.

Other brackets are also used for the same purpose but with no ligature tie. These brackets are qualified of self-ligating braces.

But such a bracket is easily visible, making the bracket unaesthetic. Furthermore, and especially when the pearl is placed on the lingual surface of a tooth, the bracket as already known could cause a discomfort, when, for example, the tongue touches the bracket.

In addition, other orthodontic appliances exist consisting on a removable device, usually made of hard acrylic that fits over the occlusal and incisal surfaces of the teeth in one arch. Such occlusal appliance is generally called a splint.

Moreover, such a splint can be used individually when the patient suffers from a slight malocclusion of the jaws and/or dental misalignment. Another configuration is to use a splint further to a treatment with an orthodontic appliance comprising one or a plurality of orthodontic wires and a plurality of brackets, the use of such a splint complementing the orthodontic treatment.

A splint is designed according to the future intended arrangement of the teeth. Therefore, when a person wears the splint over the teeth, the splint does not exactly fit with the teeth. Where the splint does not fit with the teeth, the splint applies a pressure to the teeth. This pressure guides the teeth into the desired alignment. So, gradually, the splint fits more and more with the teeth. But, regarding a particular tooth, it appears that, because of its intrinsic characteristics (such as size or shape for example), or because the splint fits well with this tooth, or again because the splint itself cannot apply the correcting movement desired, the splint does not apply a pressure on this tooth. In this situation, it is necessary to place an attachment on the tooth.

Such an attachment is like a bump or dot. The attachment provides an anchor point. The attachment helps to apply the pressure on the tooth.

Therefore, despite the simplicity of this treatment with splint, a preliminary step consisting on the placement of the attachments on teeth is required.

But, such attachment has several disadvantages. Indeed, an attachment is unaesthetic. In addition, the attachment must be bonded on the tooth, which requires time in order to be placed on teeth, especially when several teeth must be provided with an attachment.

Documents KR 101 461 317 B1 and US 2008/057460 A1 both show a pearl shaped bracket having an external surface consisting in a first surface being destined to be in contact with a tooth and an opposite smooth second surface, wherein the second surface further comprises an apex, wherein the apex is smooth, wherein the second surface comprises first and second openings which delimit a passage, the first opening and the second opening being arranged approximately on both sides of the apex, wherein the passage defines a hollow channel for an archwire and extends longitudinally along a longitudinal direction through the first and second openings, within the pearl, wherein the passage has a square cross section in KR 101 461 317 B1, and a circular cross section in US 2008/057460 A1.

### SUMMARY OF THE DISCLOSURE

The object of the present invention is a pearl being destined to be placed on a tooth for an orthodontic treatment, the pearl having a surface, the surface consisting of a first surface and a second surface , the first surface being destined to be in contact with a tooth and the second surface being opposite to the first surface, wherein the second surface being smooth and wherein the second surface further comprises an apex, wherein the apex is smooth, wherein the second surface comprises a first opening and a second opening which delimit a passage, the first opening and the second opening being arranged approximately on both sides of the apex, wherein the passage defines a hollow channel for the archwire and extends longitudinally along a longitudinal direction through the first opening and the second opening, within the pearl wherein the cross-section of the passage is a mix of a circular shape with a square, a rectangular and/or a triangular shape.

Such a pearl allows, in addition to its usefulness for an orthodontic treatment with one or more archwire, applying a pressure on the tooth.

In addition, the pearl has a shape which is complementary to the shape of a portion of the splint.In various embodiments of the disclosure, one and/or the other of the following features may be incorporated in the pearl of the disclosure, alone or in mutual combination:
- the pearl is coated;
- the external surface of the pearl comprises a smooth material;
- the external surface of the first surface comprises a smooth material;
- the external surface of the a second surface comprises a smooth material;
- the first surface has a pearl area which is in contact with a tooth area on a tooth, the pearl area and the tooth area being complementary,
- the pearl has a volume comprised between 3 mm³ (cubic millimetre) and 11 mm³, the volume being delimited by the surface,
- the first surface has a maximum vertical dimension of 4 mm and a maximum horizontal dimension of 3 mm and wherein the apex is at a maximal distance of the first surface of 3 mm,
- the material of the passage ,delimited by the first and second openings on the second surface, comprises metal,
- such a passage is in metal.
- the second surface comprises a third and fourth openings defining a supplementary passage,
- the material of such a passage comprises metal,
- such a passage is in metal.

Another object of the present invention a method of manufacturing a pearl , the pearl being destined to be placed on a tooth for an orthodontic treatment, the pearl comprising a surface, the surface consisting of a first surface and a second surface, the first surface being destined to be in contact with a tooth and the second surface being opposite to the first surface, the second surface not comprising any sharp corner, wherein the pearl is obtained by additive manufacturing and wherein the second surface further comprises an apex, wherein the apex is smooth,wherein the second surface comprises a first opening and a second opening which delimit a passage, the first opening and the second opening being arranged approximately on both sides of the apex, wherein the passage defines a hollow channel for the archwire and extends longitudinally along a longitudinal direction through the first opening and the second opening, within the pearl wherein the cross-section of the passage is a mix of a circular shape with a square, a rectangular and/or a triangular shape.

In an example, the additive manufacturing is made with a ceramic material.

In another example, the additive material is made with a biocompatible material.

### BRIEF DESCRIPTION OF THE DRAWINGS

Other characteristics and advantages of the disclosure will readily appear from the following description of examples, provided as non-limitative examples, in reference to the accompanying drawings.
Figure 1 is an overview of several pearls for an orthodontic treatment.
Figure 2 is a perspective view of a pearl according to the disclosure, the pearl being placed on a tooth.
Figure 3 is a front view of an example of the pearl according to the disclosure.
Figure 4 a perspective side view of the pearl of figure 3.
Figure 5 a cross-section side view of the pearl of figure 3.
Figures 6 and 7 are a front view of another example of the pearl according to the disclosure.
Figure 8 is a front view of another example of the pearl according to the disclosure.
Figure 9 is a perspective view of a splint intended to be placed on teeth.
Figure 10 is a lateral view of a part of the internal surface of the splint of figure 9.
Figure 11 is a perspective view of the splint of figure 9.

### DETAILLED DESCRIPTION OF THE DRAWINGS

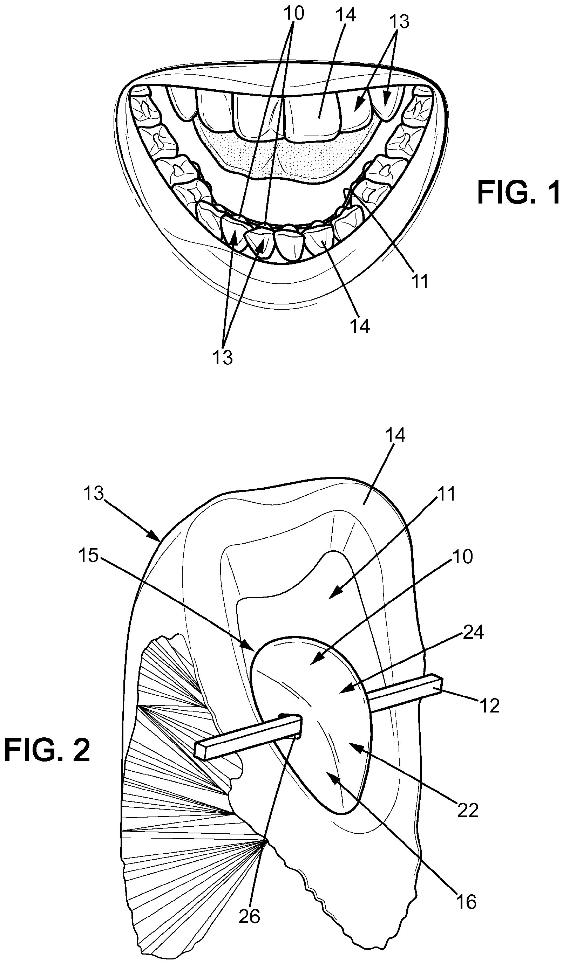

The figures illustrate different examples of a pearl 10 according to the disclosure. The pearl 10 is used for an orthodontic treatment. For example, as illustrated in figures 1 and 2, the pearl 10 is affixed on a tooth 14. In this case, the pearl 10 is affixed on the lingual surface 11 of the tooth 14. However, in another example, the pearl 10 may be affixed on the labial 13 surface of the tooth 14.

More precisely, the pearl 10 is a holding element for an archwire 12. More precisely, the pearl 10 has the function of a bracket for the archwire 12. The pearl 10 holds the archwire 12 within it, this avoids the archwire 12 to release from the pearl 10. In general, an orthodontic arch is formed when an archwire 12 is inserted in a series of pearls 10 mounted on several teeth of the same jaw. When the pearls 10 are affixed on the lingual surface 11 of the teeth, the orthodontic arch is a lingual orthodontic arch. When the pearls 10 are affixed on the labial surface 13 of the teeth, the orthodontic arch is a labial orthodontic arch.

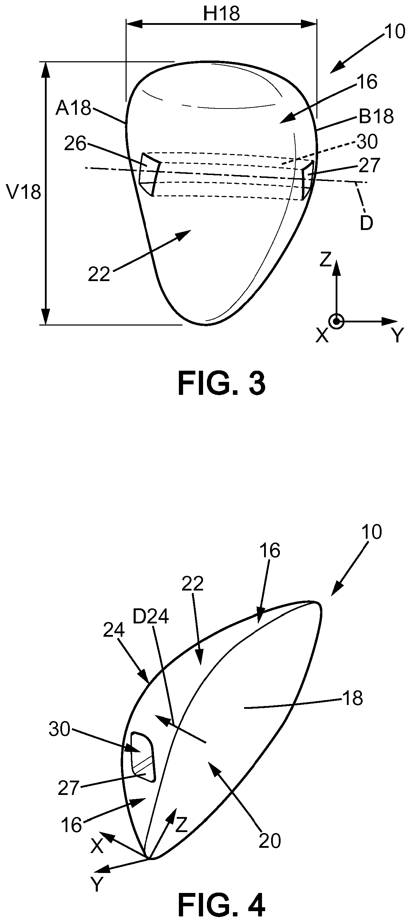

Referring now to figures 3 and 4, the pearl 10 has a surface 16. The surface 16 consists of a first surface 18 and a second surface 22.

The first surface 18 and the second surface 22 delimit the volume of the pearl 10. Advantageously, the volume of the pearl is comprised between 2 mm³ (cubic millimetre) and 25 mm³. Preferably, the volume is comprised between 3 mm³ and 11 mm³. The pearl 10 has thus a particular compact size relative to a tooth. For example, for a tooth, the pearl 10 occupies between 20% and 99% of the lingual surface of the tooth. The pearl 10 may have a shape that is anatomic and/or isomorphic with the teeth. In other words, for a tooth 14 that is wider on its top free end than on its base, the shape of the pearl 10 can also be wider toward the top free end of the tooth 14 than toward the base of the tooth.

In addition, the pearl weights preferably between lg (gram) and 10 g.

The pearl 10 is for example made of ceramic material. Ceramic has a similar colour to the one of a tooth, which improves the aesthetic property of the pearl 10. In addition, ceramic is biocompatible, which means that it is compatible with an utilization for a human body. Ceramic is also a material resistant to load, which provide a good bearing of the pearl 10 regarding the load applied by the archwire 12 on the pearl 10. However, the pearl 10 may be made of other materials such as biocompatible resins.

Manufacture in one piece makes it possible to do away with any assembly problems associated with manual handling. Such pearl 10 is especially manufactured in one piece when it is made of plastic material, for instance biocompatible resins.

Besides, it may be manufactured in at least two parts assembled together by attaching means, like snap-fitting for instance. Such a manufacture in two parts allows an optimization of the quantity of material used and allows thus a reduction of the costs. The manufacture in at least two parts may be particularly applied when the pearl 10 comprises other material such as ceramic. Actually, the ceramic materials are generally more expensive than the plastic ones. In addition the materials used in orthodontic treatment (plastic and ceramic) need to be biocompatible. Besides, the manufacture in at least two parts may be applied for technical / economic reasons.

Besides, the pearl can be coated. More precisely, the external surface of the pearl 10 can be coated. In fact, the pearl 10 could be manufactured in metal for technical or economic reasons and coated with a smooth material at its surface to increase the patient's comfort. Likewise, the pearl 10 can be made of a smooth material.

A smooth material is for instance a ceramic material or a plastic material.

The first surface 18 is destined to be in contact with the tooth 14. The first surface 18 has a pearl area 20. The pearl area 20 is the area which is destined to be in contact with the tooth 14, on a tooth area 15. Advantageously, the pearl area 20 and the tooth area 15 are complementary. In other words, the shape of the pearl area 20 and the shape of the tooth area 15 are in a complementary form. In that way, the entirety of the pearl area 20 is in contact with the entirety of the tooth area 15. When the pearl is coated, it means that at least the external surface of the second surface 22 is coated. When the pearl is coated, the external surface of the first surface 18 may additionally be coated.

The second surface 22 is opposite to the first surface 18. The second surface 22 is destined to be in contact with the surrounding environment of the inside of a mouth. A tongue can therefore touch the second surface 22. In addition, the second surface 22 is destined to be crossed by the archwire 12.

The second surface 22 does not comprise any sharp corner. In other words, there is no surface irregularity or roughness on the second surface 22. The second surface 22 is therefore smooth. The second surface 22 is thus shaped in such a way that it completes the external aspect of a tooth 14.

In addition, for example, the second surface 22 has a domed shape. Preferably, the angles between the tangents of the second surface 22 are comprised between and 120° and 180°.

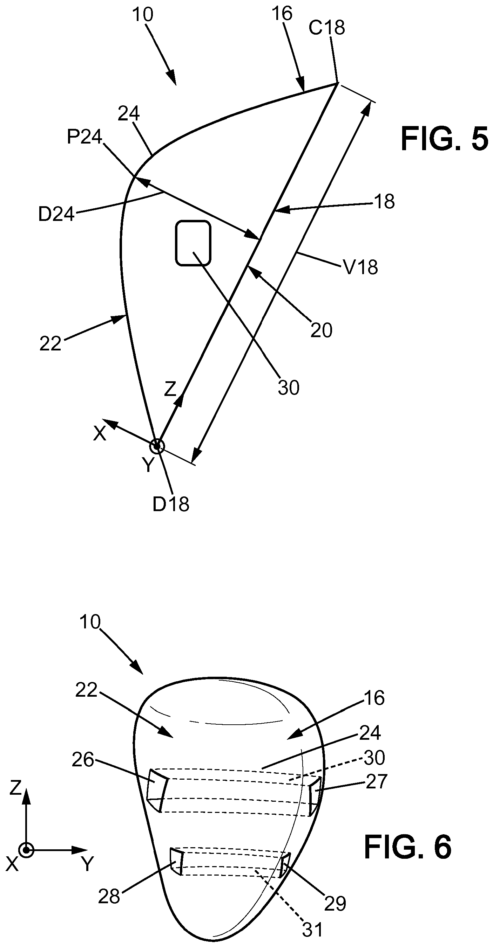

As depicted in figure 5 for example, the second surface 22 is convex. The convexity of the second surface 22 may be more or less pronounced. Indeed, in case the tooth 14 comprises a hole at the location where the pearl 10 is destined to be placed, the convexity of the second surface 22 is low (i.e. the second surface 22 is only few curved). In this case, the pearl 10 closes the hole. As a result, the shape of the first surface 18 is more convex than the shape of the second surface 22. In addition, the second surface 22 is in continuity with the surface of the tooth 14.

More precisely, mathematically speaking, the second surface 22 can be represented as a smooth function. The smooth function has its curves and at least its first derivate continuous. For example, the function which represents the second surface 22 may be of class C¹ if only first derivates are continuous. In another example, the function may be of class C², and its first and second derivates are continuous. In another example, the function may be of class C³, and its first, second and third derivates are continuous. In other words, the function may be of class Cⁿ, and its n derivates are continuous, n being a positive integer.

This particular shape of the second surface 22 provides an aesthetic result of the pearl 10. In addition, when a person runs his/her tongue over his/her tooth, he/she does not have the feeling the tooth comprises a foreign element on its surface. Due to the shape of the second surface 22, the tongue does not hook on the pearl 10, or is not skinned when running over the pearl 10.

The second surface 22 comprises an apex 24. The apex 24 is not sharp. In fact, the apex 24 is convex. The radius of curvature of the apex 24 is chosen in order to give as much as possible the feeling of touching the tooth 14 (and therefore the feeling of absence of the pearl 10). For example, when the pearl 10 is placed on a tooth where the tooth or the pearl 10 is capable of being in contact with a tooth of the opposite jaw, the radius of curvature of the apex 24 should be selected in order to avoid a contact between the pearl 10 and the tooth of the opposite jaw.

The apex 24 is located relative to a passage 30 that will be discussed below.

As illustrated for example in figure 3, the second surface 22 comprises a first opening 26 and a second opening 27. The first opening 26 and the second opening 27 delimit a passage 30. The first opening 26 and the second opening 27 are arranged approximately on both sides of the apex 24.

The passage 30 defines a hollow channel for the archwire 12. The passage 30 extends longitudinally along a longitudinal direction D through the first opening 26 and the second opening 27, within the pearl 10. The first and second openings 26, 27 are located along the longitudinal direction D, opposite with regard to the apex 24. The shape of the passage 30 is provided so as to receive the archwire 12. More precisely, according to the disclosure, the passage 30 is dedicated to the archwire 12. In other words, the cross-section shape of the passage 30 corresponds to the cross-section shape of the archwire 12. However, there is a play between the archwire 12 and the passage 30. The play corresponds to the difference between the cross-section size of the passage 30 and the cross-section size of the archwire 12. More precisely, the cross-section size of the passage 30 is taller than or equal to the cross-section size of the archwire 12. The play, and therefore the cross-section size of the passage 30 and/or the cross-section size of the archwire 12 is chosen in order to allow more or less the archwire 12 to move transversely within the passage 30. The best fit between the passage 30 and the archwire 12 is thus chosen for this purpose. The higher the play is, the more the archwire 12 will move within the passage 30. For example, if the cross-section size of the passage 30 almost corresponds to the cross-section size of the archwire 12, the archwire 12 can barely move transversely within the passage 30. In this way, the more the friction between the passage 30 and the archwire 12, and the more the movements of the tooth 14 are controlled (such as for example the torque movement). On the contrary, if the cross-section size of the passage 30 is higher than the cross-section size of the archwire 12, the archwire 12 can move transversely within the passage 30.

However, it should be noted that in most cases, a longitudinal movement (along the longitudinal direction D) of the archwire 12 within the passage 30 should be possible in order to allow a movement of the tooth 14 during the orthodontic treatment.

Besides, when the pearl 10 is made of a smooth material, the passage 30 can be in metal in order to facilitate the insertion of the archwire 12 and to reduce the friction between the archwire 12 and the passage 30.

As it can be seen in figure 5, the cross-section of the passage 30 can be square. In another example, the cross-section of the passage 30 may be rectangular.

In another example, the cross-section of the passage 30 may be circular.

The cross-section of the passage 30 may also be triangular.

However, according to the present invention, the cross-section of the passage 30 is a mix of a circular shape with a square, a rectangular and/or a triangular shape.

For example, the passage 30 can have a cross-section with a square angle and the remainder rounded. In another example, the passage can have a cross-section with two square angles and the remainder rounded.

A square section of the passage 30 is particularly adapted to a square archwire. Likewise, a rectangular section of the passage 30 is particularly adapted to rectangular archwire, and a circular section of the passage 30 is particularly adapted to circular archwire. However, it should be noted that it could be possible to use a rectangular or circular archwire with a square passage, a rectangular or square archwire with a circular passage, and so on.

In another example depicted in figure 6, the second surface 22 comprises, in addition to the first and second openings 26 and 27, a third and fourth openings 28 and 29.

The third opening 28 and the fourth opening 29 defines a supplementary passage 31. This supplementary passage 31 may be similar or different to the passage 30. For example, the supplementary passage 31 may have a circular cross-section shape while the passage 30 has a square cross-section shape;

The supplementary passage 31 defines a supplementary hollow channel for a supplementary archwire 12'. The supplementary archwire 12' may be identical or different to the archwire 12. For example, the archwire 12 is circular in its cross-section whereas the supplementary archwire 12' has a circular cross-section.

Besides, when the pearl 10 is made of a smooth material, the supplementary passage 31 can be in metal in order to facilitate the insertion of the archwire 12 and to reduce the friction between the archwire 12 and the supplementary passage 31.

The supplementary passage 31 may improve the efficiency of the orthodontic treatment. Indeed, during an orthodontic treatment, teeth are intended to move, from a malocclusion position to an aligned position. Such movement is due to the force exerted by the archwire 12 on each tooth, via the pearl 10. The position of the archwire 12 within the pearl 10 determines the movement of the tooth 14. When the pearl 10 comprises a supplementary passage 31 and when the supplementary archwire 12' is inserted into the supplementary passage 31, the archwire 12 may for example control the alignment of the tooth 14, and the supplementary archwire 12' may control the orientation of the tooth 14 and therefore the torque movement of the tooth 14. In this case, the supplementary archwire 12' completes the orthodontic treatment. In addition, the supplementary archwire 12' improves the effectiveness of the orthodontic treatment. Advantageously, the presence of a supplementary archwire 12' allows more force to be applied against the tooth 14 and thus allows reducing the duration of the orthodontic treatment.

In another example, in a first step of the orthodontic treatment, the pearl 10 can be provided with both the archwire 12 and the supplementary archwire 12'. Then, in a further step, one of the archwire 12 and the supplementary archwire 12' can be removed of the passage 30 or the supplementary passage 31 respectively.

In another example, the passage 30 and the supplementary passage 31 may receive simultaneously the archwire 12.

Coming back to figure 5, the pearl 10 is entirely filled with its material between the surface 16 and the passage 30. The pearl 10 is therefore a solid body which comprises the passage 30.

In another example, the pearl 10 may comprise matter only at its surface 16 and at around of the passage 30, the material surrounding the passage 30. In other words, in this case, the pearl 10 is hollow, but the passage 30 is delimited by the material.

In another example, the pearl 10 may comprise material and gaps between the surface 16 and the passage 30 in such a way that the arrangement of matter improves the rigidity of the pearl 10 (for example, we could imagine a honeycomb structure).

In yet another example, the pearl 10 may comprise matter only at its surface 16. In this case, the pearl 10 is hollow.

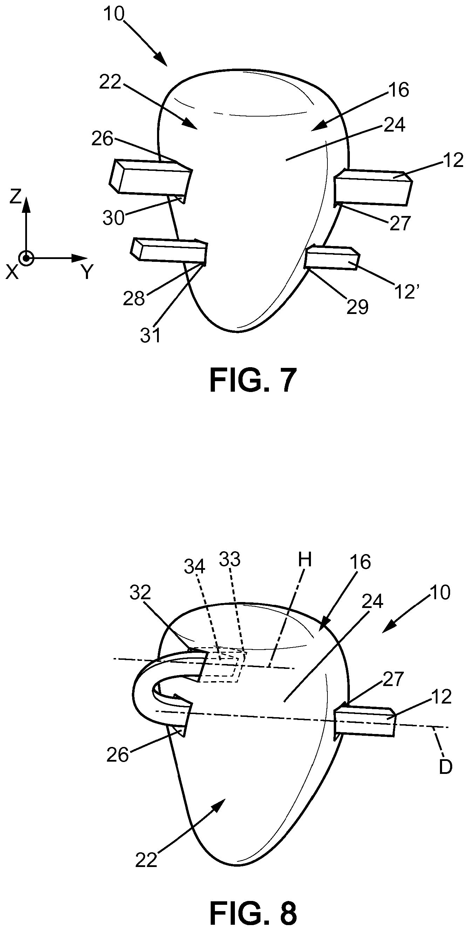

According to another example illustrated in figure 8, the second surface 22 comprises a housing opening 32. The housing opening 32 is provided for receiving a free end of the archwire 12. For example, the housing opening 32 can be provided on the pearl 10 placed on the last or first tooth of the orthodontic arch. The housing opening 32 allows to stow the free end of the archwire 12, and not to leave free the end of the archwire 12 within the mouth of the person subject to this orthodontic treatment.

In an example, when the pearl 10 is entirely filled with its material, the material delimits a housing 34 which extends from the housing opening 32 within the pearl. More precisely, along a longitudinal direction H, the housing 34 extends from the housing opening 32 to a bottom 33. The housing 34 has therefore a depth delimited by the bottom 33. The housing 34 has a shape which is complementary to the shape of the archwire 12 received within the housing 34. In addition, the housing 34 is provided so that the archwire 12 can move along the longitudinal direction H during the orthodontic treatment. The movement of the archwire 12 within the housing 34 is, for example, due to the movement of the teeth from the malocclusion position to the aligned position: the more the teeth tend towards the aligned position, the more the archwire 12 approaches the bottom 33. In fact, the depth of the housing 34 is chosen so that the archwire 12 does not abut against the bottom 33 of the housing 34. The bottom 33 of the housing 34 thus does not interfere with the orthodontic treatment.

The dimensions of the pearl 10 depend on several factors. For example, the factors can be one or a combination of the following:
- the external shape of the tooth 14,
- the dimensions of the tooth 14,
- the location of the tooth 14 on the jaw,
- the malocclusion position of the tooth 14,
- the aligned position of the tooth 14,
- the dimension of the archwire 12 provided for being inserted within the pearl 10,
- the contacts between the tooth 14 and the teeth from the opposite jaw,
- the contacts between the tooth 14 and the teeth from the same jaw,
- the comfort of the patient,
- minimising the bends of the archwire 12,
- treatment needs.

All these factors contribute to the effectiveness of the treatment and the comfort felt by the person who has such a pearl 10 affixed on a tooth 14.

Figures 4 and 5 illustrate an example of the dimensions that can have a pearl 10. The pearl 10 extends along a first direction Y, a second direction X and a third direction Z. the first direction Y, the second direction X and the third direction Z are perpendicular to each other. The first direction Y represents the horizontal direction. The second direction X represents the transversal direction. The third direction Z represents the vertical direction.

Along the first direction Y, the first surface 18 has a horizontal dimension H18, taken between its two most distant points A18 and B18, which is inferior to 5 mm (milimeter). For example, the horizontal dimension is 2,5 mm.

Advantageously, the horizontal dimension H18 can be chosen in order to comprise the largest possible length of archwire 12. The contact of the tongue with the archwire 12 is reduced. In other words, the pearl 10 protects the tongue of any discomfort when touching the archwire 12.

Along the third direction Z, the first surface 18 has a vertical dimension V18, taken between its two most distant points C18 and D18, which is inferior to 5 mm. For example, the vertical dimension is 4 mm.

Along the transversal direction X, the apex 24 is a distance D24, taken between the peak P24 of the apex 24 the first surface 18 which is comprised between 1 mm and 4 mm. For example, the distance D24 is comprised between 2 mm and 3 mm.

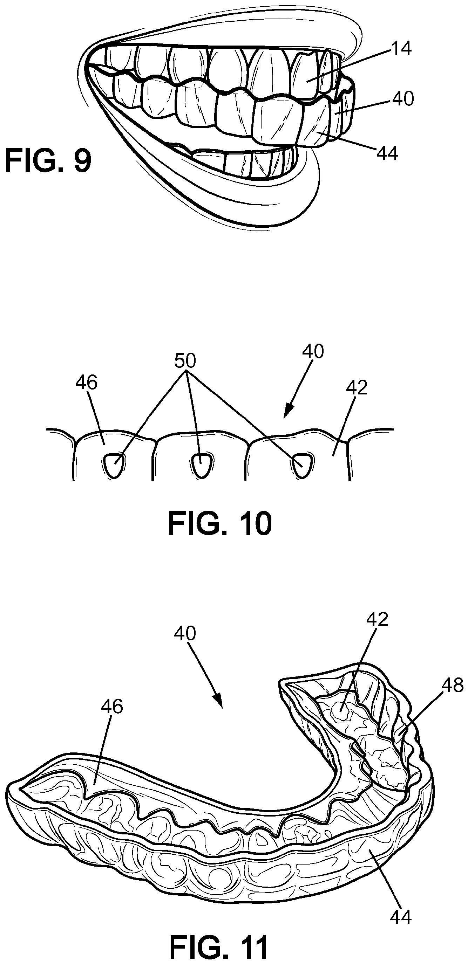

The pearl can also be used as a holding element for a splint 40 (illustrated in figure 9, 10 and 11).

Indeed, removing the archwire from the pearl means the end of the orthodontic treatment.

But, for some reasons, it could be necessary to complete this orthodontic treatment with a splint 40. The splint 40 is destined to be placed on teeth.

To that end, the splint 40 has a shape which is complementary to the one of the teeth. More precisely, the splint 40 is designed according to the future intended arrangement of the teeth. The future intended arrangement is not necessarily the aligned position of the teeth. Indeed, the future intended arrangement may be an intermediate arrangement of the teeth. Therefore, the splint 40 is designed according to whether the aligned position desired or an intermediate position.

As the splint 40 is designed according to the future intended arrangement of the teeth, the splint 40 does not exactly fit with the teeth. The splint 40 thus applies a pressure to the teeth. This pressure guides the teeth into the desired alignment.

The splint 40 comprises an internal surface 42 and an external surface 44.

The external surface 44 is destined to be in contact with the surrounding environment of the inside of a mouth.

The internal surface 42 is destined to be in contact with at least a tooth 14. In fact, the internal surface 42 corresponds to the external shape of the teeth that the splint 40 covers, in the intended arrangement of the teeth.

In addition, the internal surface 42 has also a lingual surface 46 and labial surface 48. The lingual surface 46 is destined to be in contact with the lingual surface of at least a tooth 14. The labial surface 48 is destined to be in contact with the labial surface of at least a tooth 14.

Moreover, as detailed in figure 10, the internal surface 42 comprises impressions 50. The impressions 50 are able to receive the pearl 10 placed on the teeth. In fact, each impression 50 is placed on the internal surface 42 of the splint 40 so as to receive a pearl 10. In this situation, the pearl 10 contributes to apply a pressure on the tooth 14. Thus the impression 50 fits more or less well with the pearl 10. Indeed, if the pearl is well received within the impression 50, the pearl 10 applies few or no pressure on the tooth 14. On the contrary, if the pearl 10 is not well received within the impression 50 (and thus goes beyond the impression 50) the pearl 10 transfers the pressure applied on it by the splint 40 to the tooth 14.

When the pearl 10 is placed on the lingual surface of the tooth 14, the impression 50 is thus placed on the lingual surface 46 of the internal surface 42 of the splint 40. Likewise, when the pearl 10 is placed on the labial surface of the tooth 14, the impression 50 is thus placed on the labial surface 48 of the internal surface 42 of the splint 40. The impression 50 has a general concave shape, which is complementary to the convex shape of the second surface 22 of a pearl 10. In other words, the impression 50 is like a notch which receives the pearl 10.

As a result, each pearl 10 acts as a retainer of the splint against the teeth. The splint 40 does not fall out of teeth.

Another object of the disclosure is a method of manufacturing the pearl 10.

According to the disclosure, the pearl 10 is manufactured by additive manufacturing. For example, the additive manufacturing is three-dimensional printing. Three-dimensional printing reduces costs and increases productive capacity.

Advantageously, the pearl 10 can be made of ceramic materials or biocompatible resin.

Prior to printing, the pearl 10 is designed by computer-aided design (CAD). The computer aided-design takes into account the malocclusion position and an aligned position of the tooth or teeth.

In another example, not part of the claimed method, the pearl 10 is manufactured by subtractive manufacturing.

For example, the subtractive manufacturing is done by cutting materials with a CNC (computer numerical control) milling machine or with a laser cutting machine.

In another example, not part of the claimed method, the pearl 10 is made by casting metal or ceramic or PEEK from a mould.

## Claims

1. A pearl (10) being destined to be placed on a tooth (14) for an orthodontic treatment, the pearl (10) having a surface (16), the surface (16) consisting of a first surface (18) and a second surface (22), the first surface (18) being destined to be in contact with a tooth (14) and the second surface (22) being opposite to the first surface (18), wherein the second surface (22) is smooth, and wherein the second surface (22) further comprises an apex (24), wherein the apex (24) is smooth, wherein the second surface (22) comprises a first opening (26) and a second opening (27) which delimit a passage (30), the first opening (26) and the second opening (27) being arranged approximately on both sides of the apex (24), wherein the passage (30) defines a hollow channel for an archwire (12) and extends longitudinally along a longitudinal direction through the first opening (26) and the second opening (27), within the pearl (10), wherein the cross-section of the passage (30) is a mix of a circular shape with a square, a rectangular and/or a triangular shape.

2. The pearl (10) of claim 1, wherein said cross-section of the passage (30) is chosen between a cross-section comprising a square angle and the remainder rounded, and a cross-section comprising two square angles and the remainder rounded.

3. The pearl (10) of claim 1 or 2, wherein the pearl (10) is coated.

4. The pearl (10) of anyone of the preceding claims, wherein the first surface (18) has a pearl area (20) which is in contact with a tooth area (15) on a tooth (14), the pearl area (20) and the tooth area (15) being complementary.

5. The pearl (10) of anyone of the preceding claims, wherein the pearl (10) has a volume comprised between 3 mm³ (cubic millimetre) and 11 mm³, the volume being delimited by the surface (16).

6. The pearl (10) of any one of the preceding claim, wherein the first surface (18) has a maximum vertical dimension (V18) of 4 mm and a maximum horizontal dimension (H18) of 3 mm and wherein the apex (24) is at a maximal distance (D24) of the first surface (18) of 3 mm.

7. A method of manufacturing a pearl (10), the pearl (10) being destined to be placed on a tooth for an orthodontic treatment, the pearl (10) comprising a surface (16), the surface (16) consisting of a first surface (18) and a second surface (22), the first surface (18) being destined to be in contact with a tooth (14) and the second surface (22) being opposite to the first surface (18), the second surface (22) being smooth, wherein the pearl (10) is obtained by additive manufacturing, and wherein the second surface (22) further comprises an apex (24), wherein the apex (24) is smooth, wherein the second surface (22) comprises a first opening (26) and a second opening (27) which delimit a passage (30), the first opening (26) and the second opening (27) being arranged approximately on both sides of the apex (24), wherein the passage (30) defines a hollow channel for an archwire (12) and extends longitudinally along a longitudinal direction through the first opening (26) and the second opening (27), within the pearl (10), wherein the cross-section of the passage (30) is a mix of a circular shape with a square, a rectangular and/or a triangular shape.

8. The method of the preceding claim, wherein said cross-section of the passage (30) is chosen between a cross-section comprising a square angle and the remainder rounded, and a cross-section comprising two square angles and the remainder rounded.

9. The method of the preceding claim, wherein the additive manufacturing is made with a ceramic material.

10. The method of claim 7, wherein the additive manufacturing is made with a biocompatible material.

## Patentansprüche

1. Perle (10), die dazu bestimmt ist, auf einem Zahn (14) für eine kieferorthopädische Behandlung platziert zu werden,
wobei die Perle (10) eine Oberfläche (16) aufweist, die aus einer ersten Oberfläche (18) und einer zweiten Oberfläche (22) besteht, wobei die erste Oberfläche (18) dazu bestimmt ist, in Kontakt mit einem Zahn (14) zu sein, und die zweite Oberfläche (22) der ersten Oberfläche (18) gegenüberliegt, wobei die zweite Oberfläche (22) glatt ist,
und wobei die zweite Oberfläche (22) ferner einen Scheitelpunkt (24) umfasst, wobei der Scheitelpunkt (24) glatt ist, wobei die zweite Oberfläche (22) eine erste Öffnung (26) und eine zweite Öffnung (27) aufweist, die einen Durchgang (30) begrenzen, wobei die erste Öffnung (26) und die zweite Öffnung (27) ungefähr auf beiden Seiten des Scheitelpunkts (24) angeordnet sind, wobei der Durchgang (30) einen Hohlkanal für einen Bogendraht (12) definiert und sich in Längsrichtung durch die erste Öffnung (26) und die zweite Öffnung (27) innerhalb der Perle (10) längs erstreckt, wobei der Querschnitt des Durchgangs (30) eine Mischung aus einer Kreisform mit einer quadratischen, einer rechteckigen und/oder einer dreieckigen Form ist.

2. Perle (10) nach Anspruch 1, wobei der Querschnitt des Durchgangs (30) zwischen einem Querschnitt mit einem quadratischen Winkel und einem abgerundeten Rest und einem Querschnitt mit zwei quadratischen Winkeln und einem abgerundeten Rest gewählt wird.

3. Perle (10) nach Anspruch 1 oder 2, wobei die Perle (10) beschichtet ist.

4. Perle (10) nach einem der vorhergehenden Ansprüche, wobei die erste Oberfläche (18) einen Perlenbereich (20) aufweist, der mit einem Zahnbereich (15) an einem Zahn (14) in Kontakt steht, wobei der Perlenbereich (20) und der Zahnbereich (15) komplementär sind.

5. Perle (10) nach einem der vorhergehenden Ansprüche, wobei die Perle (10) ein Volumen zwischen 3 mm³ (Kubikmillimeter) und 11 mm³ aufweist, wobei das Volumen durch die Oberfläche (16) begrenzt ist.

6. Perle (10) nach einem der vorhergehenden Ansprüche, wobei die erste Oberfläche (18) eine maximale vertikale Abmessung (V18) von 4 mm und eine maximale horizontale Abmessung (H18) von 3 mm aufweist und wobei der Scheitelpunkt (24) sich in einem maximalen Abstand (D24) von der ersten Oberfläche (18) von 3 mm befindet.

7. Verfahren zur Herstellung einer Perle (10), wobei die Perle (10) dazu bestimmt ist, auf einem Zahn für eine kieferorthopädische Behandlung platziert zu werden, wobei die Perle (10) eine Oberfläche (16) umfasst, wobei die Oberfläche (16) aus einer ersten Oberfläche (18) und einer zweiten Oberfläche (22) besteht, wobei die erste Oberfläche (18) dazu bestimmt ist, in Kontakt mit einem Zahn (14) zu sein, und die zweite Oberfläche (22) der ersten Oberfläche (18) gegenüberliegt, wobei die zweite Oberfläche (22) glatt ist, wobei die Perle (10) durch additive Fertigung erhalten wird, und wobei die zweite Oberfläche (22) ferner einen Scheitelpunkt (24) aufweist, wobei der Scheitelpunkt (24) glatt ist, wobei die zweite Oberfläche (22) eine erste Öffnung (26) und eine zweite Öffnung (27) aufweist, die einen Durchgang (30) begrenzen, wobei die erste Öffnung (26) und die zweite Öffnung (27) ungefähr auf beiden Seiten des Scheitelpunkts (24) angeordnet sind, wobei der Durchgang (30) einen Hohlkanal für einen Bogendraht (12) definiert und sich in Längsrichtung durch die erste Öffnung (26) und die zweite Öffnung (27) innerhalb der Perle (10) längs erstreckt, wobei der Querschnitt des Durchgangs (30) eine Mischung aus einer Kreisform mit einer quadratischen, einer rechteckigen und/oder einer dreieckigen Form ist.

8. Verfahren nach dem vorhergehenden Anspruch, wobei der Querschnitt des Durchgangs (30) zwischen einem Querschnitt mit einem quadratischen Winkel und einem abgerundeten Rest und einem Querschnitt mit zwei quadratischen Winkeln und einem abgerundeten Rest gewählt wird.

9. Verfahren nach dem vorhergehenden Anspruch, wobei die additive Fertigung mit einem keramischen Material erfolgt.

10. Verfahren nach Anspruch 7, wobei das Material für die additive Fertigung aus einem biokompatiblen Material hergestellt wird.

## Revendications

1. Perle (10) destinée à être placée sur une dent (14) pour un traitement orthodontique, la perle (10) ayant une surface (16), la surface (16) consistant en une première surface (18) et une seconde surface (22), la première surface (18) étant destinée à être en contact avec une dent (14) et la seconde surface (22) étant opposée à la première surface (18), dans laquelle la seconde surface (22) est lisse, et dans laquelle la seconde surface (22) comprend en outre un sommet (24), dans laquelle le sommet (24) est lisse, dans laquelle la seconde surface (22) comprend une première ouverture (26) et une seconde ouverture (27) qui délimitent un passage (30), la première ouverture (26) et la seconde ouverture (27) étant agencées approximativement des deux côtés du sommet (24), dans laquelle le passage (30) définit un canal creux pour un fil métallique pour arc (12) et s'étend longitudinalement le long d'une direction longitudinale à travers la première ouverture (26) et la seconde ouverture (27), au sein de la perle (10), dans laquelle la section transversale du passage (30) est un mélange d'une forme circulaire avec une forme carrée, rectangulaire et/ou triangulaire.

2. Perle (10) selon la revendication 1, dans laquelle ladite section transversale du passage (30) est choisie entre une section transversale comprenant un angle droit et le reste arrondi, et une section transversale comprenant deux angles droits et le reste arrondi.

3. Perle (10) selon la revendication 1 ou 2, dans laquelle la perle (10) est revêtue.

4. Perle (10) selon l'une quelconque des revendications précédentes, dans laquelle la première surface (18) présente une zone de perle (20) qui est en contact avec une zone de dent (15) sur une dent (14), la zone de perle (20) et la zone de dent (15) étant complémentaire.

5. Perle (10) selon l'une quelconque des revendications précédentes, dans laquelle la perle (10) présente un volume compris entre 3 mm³ (millimètre cube) et 11 mm³, le volume étant délimité par la surface (16).

6. Perle (10) selon l'une quelconque des revendications précédentes, dans laquelle la première surface (18) présente une dimension verticale maximale (V18) de 4 mm et une dimension horizontale maximale (H18) de 3 mm et dans laquelle le sommet (24) est à une distance maximale (D24) de la première surface (18) de 3 mm.

7. Procédé de fabrication d'une perle (10), la perle (10) étant destinée à être placée sur une dent pour un traitement orthodontique, la perle (10) comprenant une surface (16), la surface (16) consistant en une première surface (18) et un seconde surface (22), la première surface (18) étant destinée à être en contact avec une dent (14) et la seconde surface (22) étant opposée à la première surface (18), la seconde surface (22) étant lisse, dans lequel la perle (10) est obtenue par fabrication additive, et dans lequel la seconde surface (22) comprend en outre un sommet (24), dans lequel le sommet (24) est lisse, dans lequel la seconde surface (22) comprend une première ouverture (26) et une seconde ouverture (27) qui délimitent un passage (30), la première ouverture (26) et la seconde ouverture (27) étant agencées approximativement des deux côtés du sommet (24), dans lequel le passage (30) définit un canal creux pour un fil métallique pour arc (12) et s'étend longitudinalement le long d'une direction longitudinale à travers la première ouverture (26) et la seconde ouverture (27), au sein de la perle (10), dans lequel la section transversale du passage (30) est un mélange d'une forme circulaire avec une forme carrée, rectangulaire et/ou triangulaire.

8. Procédé selon la revendication précédente, dans lequel ladite section transversale du passage (30) est choisie entre une section transversale comprenant un angle droit et le reste arrondi, et une section transversale comprenant deux angles droits et le reste arrondi.

9. Procédé selon la revendication précédente, dans lequel la fabrication additive est effectuée avec un matériau céramique.

10. Procédé selon la revendication 7, dans lequel la fabrication additive est effectuée avec un matériau biocompatible.
